# EUROPEAN PATENT APPLICATION

(11) **EP 3 553 555 A1**
(43) Date of publication of application: **16.10.2019**
(21) Application number: 18181799.0
(22) Date of filing: 05.07.2018
(51) Int. Cl.: G01S 11/12

(54) **3D SENSING SYSTEM**

(30) Priority: 09.04.2018 TW 107112053
(71) Applicant: Acer Incorporated, New Taipei City 221 (TW)
(72) Inventor: Lin, Jia-Yu, 221 New Taipei City (TW); Chen, Chih-Chiang, 221 New Taipei City (TW)
(74) Representative: Becker Kurig Straus

(57) **Abstract**

A 3D sensing system includes a light source, an MEMS scanning mirror, an MEMS controller, one or multiple sensors, and an MCU. The MEMS scanning mirror is arranged to reflect the light provided by the light source. The MEMS controller is configured to control the angle of the MEMS scanning mirror in order to scan a surface. The one or multiple sensors are used to record the time when detecting the light reflected by the MEMS scanning mirror. The MCU is configured to calculate the location of the one or multiple sensors based on the recorded time by the one or multiple sensors.

## Description

### Field of the Invention

The present invention is related to a 3D sensing system using ToF and MEMS techniques.

### Background of the Invention

As technology advances, 3D sensing has been introduced into new applications such as advanced driver assistance systems (ADAS), virtual reality (VR), augmented reality (AR), unman stores and facial recognition. There are a variety of technologies for digitally acquiring the shape of a 3D object. For example, a triangulation based 3D sensing system utilizes a stereoscopic technique, a structured light technique or a laser triangulation technique. A time-delay based 3D sensing system utilizes a time-of-flight (ToF) technique or an interferometry technique.

In a ToF 3D sensing system, a laser is used to emit a pulse of light and the amount of time before the reflected light is seen by a detector is measured. Since the speed of light is a known factor, the round-trip time of the pulse of laser may be converted into distance. Therefore, how to increase the scan accuracy and reduce the scan time is essential to a ToF 3D sensing system.

### Summary of the Invention

The present invention aims at providing a 3D sensing system capable of increasing scan accuracy and reducing scan time.

This is achieved by a 3D sensing system according to claim 1. The dependent claims pertain to corresponding further developments and improvements.

As will be seen more clearly from the detailed description following below, the claimed 3D sensing system includes a light source, an MEMS scanning mirror, an MEMS controller, one or multiple sensors, and a micro control unit. The MEMS scanning mirror is arranged to reflect a light provided by the first light source. The MEMS controller is configured to control an angle of the MEMS scanning mirror in order to scan a plane. The one or multiple sensors is configured to record a time when detecting the light reflected by the first MEMS scanning mirror. The micro control unit is configured to calculate a location of the one or multiple sensors based on the time recorded by the one or multiple sensors.

### Brief Description of the Drawings

In the following, the invention is further illustrated by way of example, taking reference to the accompanying drawings.
FIG. 1 is a functional diagram illustrating a 3D sensing system according to an embodiment of the present invention.
FIG. 2 is a diagram illustrating the operation of the MEMS scanning mirror according to an embodiment of the present invention.
FIG. 3 is a diagram illustrating the operation of the MEMS scanning mirror according to an embodiment of the present invention.
FIG. 4 is a diagram illustrating the operation of the 3D sensing system according to an embodiment of the present invention.
FIG. 5 is a diagram illustrating the scan method of the 3D sensing system according to an embodiment of the present invention.
FIG. 6 is a diagram illustrating the scan method of the 3D sensing system according to another embodiment of the present invention.
FIG. 7 is a diagram illustrating the scan method of the 3D sensing system according to another embodiment of the present invention.
FIG. 8 is a functional diagram illustrating a 3D sensing system according to another embodiment of the present invention.
FIG. 9 is a diagram illustrating the disposition of multiple light sources in the 3D sensing system according to an embodiment of the present invention.
FIG. 10 is a diagram illustrating the disposition of multiple light sources in the 3D sensing system according to another embodiment of the present invention.
FIG. 11 is a diagram illustrating the operation of the 3D sensing system according to an embodiment of the present invention.

### Detailed Description

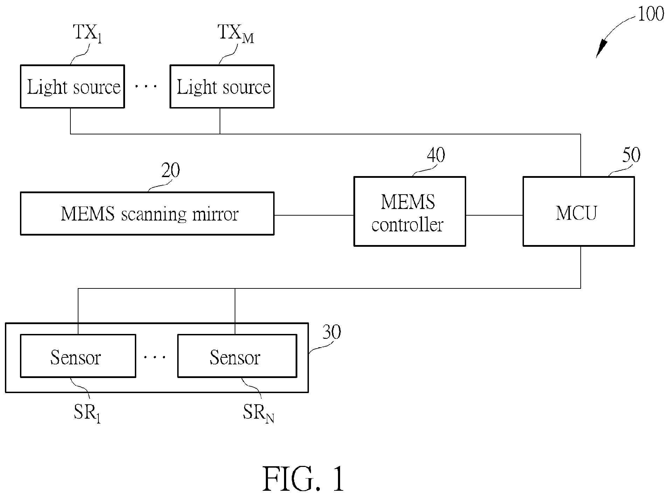

FIG. 1 is a functional diagram illustrating a 3D sensing system 100 according to an embodiment of the present invention. The 3D sensing system 100 adopts TOF technique and includes one or multiple light sources TX₁∼TX_{M},a micro electro mechanical (MEMS) scanning mirror 20, one or multiple sensors SR₁∼SR_{N} disposed on a single object 30, an MEMS controller 40, and a micro control unit (MCU) 50, wherein M and N are positive integers.

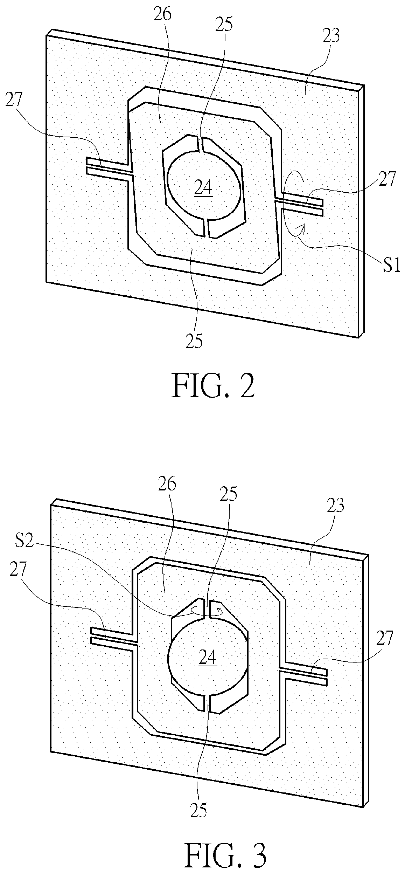

The MEMS technology is a process technology in which mechanical and electro-mechanical devices, structures, circuits, sensors or actuators are constructed on silicon wafers using special micro-fabrication techniques. The operation of MEMS devices may be actuated using electrostriction, thermoelectric, piezoelectric or piezoresistive effect. FIGs. 2 and 3 are diagrams illustrating the operation of the MEMS scanning mirror 20 according to an embodiment of the present invention. The MEMS scanning mirror 20 may include a micro-electronic coil 23, a reflecting mirror 24, a reflecting mirror flexure suspension 25, a gimbal frame 26, and a gimbal frame flexure suspension 27. By inputting current into the micro-electronic coil 23, magnetic moment may be generated on the gimbal frame 26, thereby providing magnetic torques on specific rotational axes. One of the magnetic torques provided by the gimbal frame 26 allows the gimbal frame 26 to rotate around the gimbal frame flexure suspension 27, thereby enabling the reflecting mirror 24 to rotate in the direction indicated by arrow S1, as depicted in FIG. 2. The other one of the magnetic torques provided by the gimbal frame 26 actuates the reflecting mirror 24 to operate in a resonance oscillation mode and to rotate around the reflecting mirror flexure suspension 25, thereby enabling the reflecting mirror 24 to rotate in the direction indicated by arrow S2, as depicted in FIG. 2.

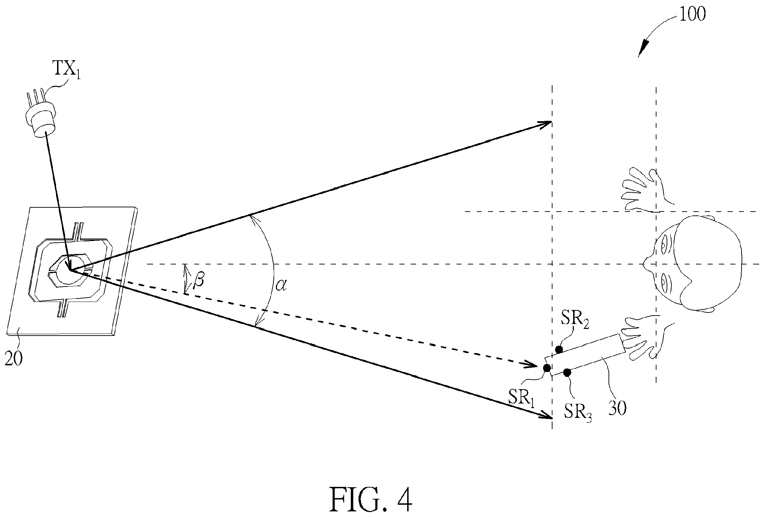

FIG. 4 is a diagram illustrating the operation of the 3D sensing system 100 according to an embodiment of the present invention. For illustrative purpose, it is assumed that the 3D sensing system 100 includes one light source TX₁ and three sensors SR₁∼SR₃, wherein the object 30 on which the sensors SR₁∼SR₃ are disposed is a hand-held user control device. As depicted in FIGs. 2 and 3, the MEMS scanning mirror 20 can reflect the light provided by the light source TX₁ in order to scan a specific plane (such as a plane in front of the user), wherein the horizontal scan angle range is α and the vertical scan angle range is β. When the sensors SR₁∼SR₃ receive light, the MCU 50 (not shown in FIG. 4) can calculate the time difference for acquiring the positions of the sensors SR₁∼SR₃, thereby responding to the user command given by the object 30.

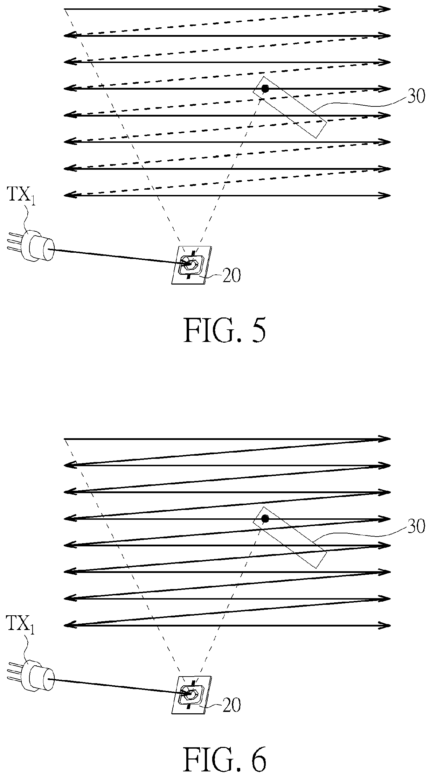

FIGs. 5-7 are diagrams illustrating the scan method of the 3D sensing system 100 according to embodiments of the present invention. For a specific scan plane of the MEMS scanning mirror 20, a vertical axis and a horizontal axis are defined based on scan timing and scan sequence in the present invention. In FIGs. 5-7, the movement of the MEMS scanning mirror 20 is indicated by arrows, wherein the solid arrows represent the actual scan lines when the light source TX₁ is emitting light and the dotted arrows represent the movement of the MEMS scanning mirror 20 without scanning (the light source TX₁ is off).

FIG. 5 depicts the embodiment in which a single laser light source TX₁ is used to perform uni-directional scan. After scanning from the start point to the end point of a current scan line, the MEMS scanning mirror 20 is configured to move from the end point of the current scan line to the start point of a subsequent scan line without scanning (indicated by the dotted arrows) and then resume scanning from the start point to the end point of the subsequent scan line. Assuming that the refresh rate of each frame is 60Hz, the specific scan plane includes 500 scan lines in the horizontal direction, and the horizontal refresh rate of the scan lines is 1/[(1/60)/500]=30KHz.

FIG.6 depicts the embodiment in which a single laser light source TX₁ is used to perform bi-directional scan. After scanning from the start point to the end point of a current scan line, the MEMS scanning mirror 20 is configured to continue scanning from the end point of the current scan line to the start point of a subsequent scan line (indicated by the solid arrows). Assuming that the refresh rate of each frame is 60Hz, the specific scan plane includes 500*2 scan lines in the horizontal direction, and the horizontal refresh rate of the scan lines is 1/[(1/60)/(500*2)]=60KHz.

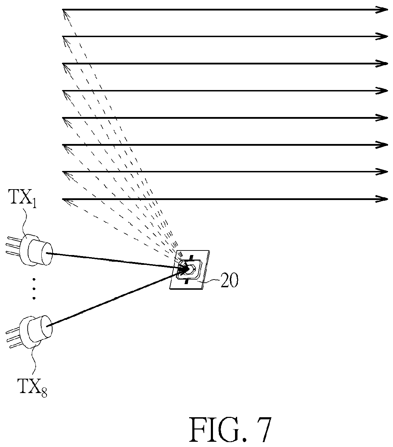

FIG.7 depicts the embodiment in which multiple laser light sources TX₁∼TX_{M} are used to perform uni-directional scan. In the embodiment of M=8 for illustrative purpose, the light sources TX₁∼TX₈ may provide light of different pulse width modulations (PWM), wavelengths, frequencies or intensities so that the MEMS scanning mirror 20 can simultaneously scan 8 scan lines. Assuming that the refresh rate of each frame is 60Hz, the specific scan plane includes 500 scan lines in the horizontal direction, and the horizontal refresh rate of the scan lines is 1/[(1/60)*8/500]=3.75KHz, thereby capable of high frequency scans.

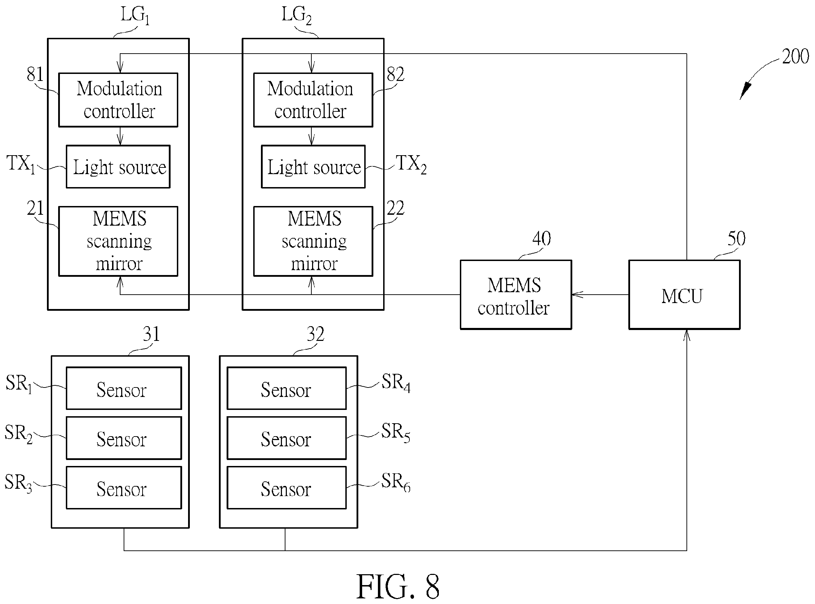

FIG. 8 is a functional diagram illustrating a 3D sensing system 200 according to another embodiment of the present invention. The 3D sensing system 200 adopts ToF technique and includes one or multiple light modules LG₁∼LG_{P}, one or multiple sensors SR₁∼SR_{N} disposed on multiple objects, an MEMS controller 40, and an MCU 50. The light modules LG₁∼LG_{P} each include one or multiple light sources TX₁∼TX_{M}, one or multiple MEMS scanning mirrors, and a modulation controller, wherein M, N and P are positive integers. For illustrative purpose, FIG. 8 depicts the embodiment of M=1, N=6 and P=2 when the 3D sensing system 200 includes two light modules LG₁ and LG₂. The light modules LG₁ includes a light source TX₁, an MEMS scanning mirror 21, and a modulation controller 81 for dynamic tracking a first object 31 on which the sensors SR₁∼SR₃ are disposed. The light modules LG₂ includes a light source TX₂, an MEMS scanning mirror 22, and a modulation controller 82 for dynamic tracking a second object 32 on which the sensors SR₄∼SR₆ are disposed. With multiple light sources and multiple objects, the MCU 50 is further configured to synchronize the data captured by each sensor and the activation time of each light source.

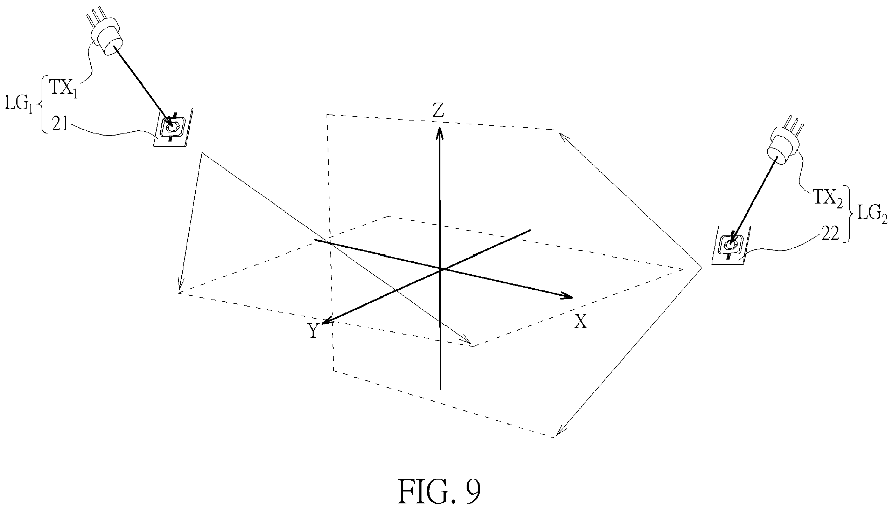

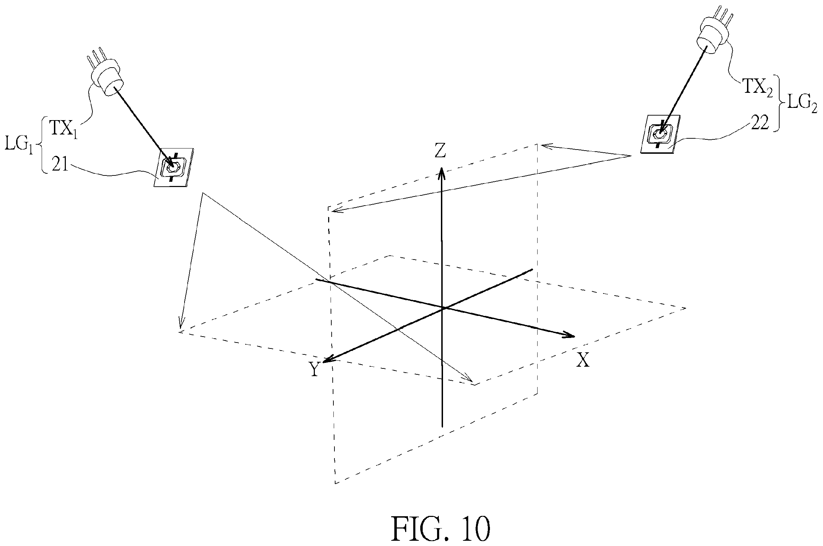

FIGs. 9 and 10 are diagrams illustrating the disposition of multiple light sources in the 3D sensing system 200 according to embodiments of the present invention. Assuming that the object is located at the origin of the X-axis, Y-axis and Z-axis in the embodiment of P=2, the light modules LG₁ may be used to perform positioning on the XY-plane. In the embodiment illustrated in FIG. 9, the light modules LG₂ may be further used to perform positioning on the XZ-plane. In the embodiment illustrated in FIG. 10, the light modules LG₃ may be further used to perform positioning on the YZ-plane.

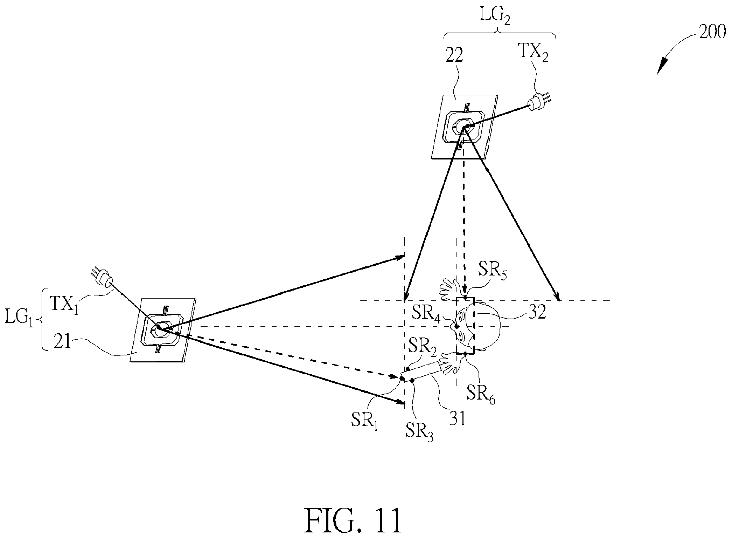

FIG. 11 is a diagram illustrating the operation of the 3D sensing system 200 according to an embodiment of the present invention. For illustrative purpose, it is assumed that the 3D sensing system 200 includes two light modules LG₁∼LG₂ and six sensors SR₁∼SR₆, wherein the first object 31 on which the sensors SR₁∼SR₃ are disposed is a hand-held control device, and the second object 32 on which the sensors SR₄∼SR₆ are disposed is a head-mounted display. As depicted in FIGs. 2, 3 and 10, the MEMS scanning mirror 21 in the light modules LG₁ can reflect the light provided by the light source TX₁ in order to scan the XZ-plane of the object (such as a plane in front of the user), and the MEMS scanning mirror 22 in the light modules LG₂ can reflect the light provided by the light source TX₂ in order to scan the YZ-plane of the object (such as a plane on one lateral side of the user). The light sources TX₁∼TX₂ may provide light of different PWMs, wavelengths, frequencies or intensities so as to be distinguishable to the sensors SR1-SR6. The light modules LG₁ and LG₂ may also be used to scan odd/even scan lines in an interleaving manner or in opposite directions for increasing scan accuracy.

In the embodiment of the present invention, the light sources TX₁∼TX_{M} may be light emitting diodes (LED) or vertical cavity surface emitting lasers (VCSEL). The sensors SR₁∼SR₂ may be charge coupled devices (CCD) or complementary metal-oxide-semiconductor (CMOS). However, the type of the light sources TX₁∼TX_{M} or the sensors SR₁∼SR_{N} does not limit the scope of the present invention.

In conclusion, the present invention provides a 3D sensing system which adopts TOF technology. Multiple MEMS scanning mirrors may be used for scanning, and multiple light sources may be used to detect locations on multiple axes or multiple objects, thereby increasing scan accuracy and reducing scan time.

## Claims

1. A 3D sensing system (100, 200), comprising:
a first light source (TX₁);
a first micro electro mechanical, MEMS, scanning mirror (20) arranged to reflect a first light provided by the first light source (TX₁);
**characterized by** comprising:
an MEMS controller (40) configured to control an angle of the first MEMS scanning mirror (20, 21) in order to scan a first plane;
one or multiple sensors (SR₁∼SR_{N}) configured to record a time when detecting the first light reflected by the first MEMS scanning mirror (20, 21); and
a micro control unit (50) configured to calculate a location of the one or multiple sensors (SR₁∼SR_{N}) based on the time recorded by the one or multiple sensors (SR₁∼SR_{N}).

2. The 3D sensing system of claim 1 (100, 200), **characterized in that:**
the first plane includes M parallel scan lines;
the MEMS controller (40) is further configured to control the angle of the first MEMS scanning mirror (20, 21) in order to scan the first plane by scanning from a start point to an end point of each scan line sequentially; and
M is an integer larger than 1.

3. The 3D sensing system of claim 2 (200), **characterized by** further comprising a second light source (TX₂), wherein the first MEMS scanning mirror (20) is further arranged to reflect a second light provided by the second light source (TX₂) for simultaneously scanning two adjacent scan lines among the M scan lines.

4. The 3D sensing system of any of claims 1-3 (100, 200), **characterized in that:**
the first plane includes M parallel scan lines;
the MEMS controller (40) is further configured to control the angle of the first MEMS scanning mirror (20) in order to scan the first plane by scanning from a start point of an m^{th} scan line among the M parallel scan lines to an end point of the m^{th} scan line and then scanning from the end point of the m^{th} scan line to a start point of an (m+1)^{th} scan line among the M parallel scan lines;
M is an integer larger than 1; and.
m is an integer which does not exceed M.

5. The 3D sensing system of any of claims 1-4 (200), **characterized by** further comprising:
a second light source (TX₂); and
a second MEMS scanning mirror (22) arranged to reflect a second light provided by the second light source (TX₂), wherein:
the MEMS controller (40) is further configured to control an angle of the second MEMS scanning mirror (22) in order to scan a second plane; and
the one or multiple sensors (SR₁∼SR_{N}) is further configured to record a time when detecting the second light reflected by the second MEMS scanning mirror (22).

6. The 3D sensing system (200) of claim 5, **characterized by** further comprising:
a first modulation controller (81) configured to modulate the first light source in order to provide the first light having a first pulse-width modulation, a first wavelength or a first frequency; and
a second modulation controller (82) configured to modulate the second light source in order to provide the second light having a second pulse-width modulation, a second wavelength or a second frequency, wherein the first pulse-width modulation is different from the second pulse-width modulation, the first wavelength is different from the second wavelength, or the first frequency is different from the second frequency.

7. The 3D sensing system (200) of any of claims 5-6, **characterized in that** the micro control unit is further configured to synchronize data captured by each sensor (SR₁∼SR_{N}) and an activation time of each light source (TX₁∼TX_{M}).

8. The 3D sensing system (100, 200) of any of claims 1-7, **characterized in that** the first light source (TX₁) is a light emitting diode or a vertical cavity surface emitting laser.

9. The 3D sensing system (100, 200) of any of claims 1-8, **characterized in that** the one or multiple sensors (SR₁∼SR_{N}) include a charge coupled device or a complementary metal-oxide-semiconductor.

10. The 3D sensing system (100, 200) of any of claims 1-9, **characterized in that** the first MEMS scanning mirror (20, 21) includes a micro-electronic coil (23), a reflecting mirror (24), a reflecting mirror flexure suspension (25), a gimbal frame (26), and a gimbal frame flexure suspension (27).
